# EUROPÄISCHE PATENTSCHRIFT

(11) **EP 0 416 163 B1**
(45) Veröffentlichungstag und Bekanntmachung des Hinweises auf die Patenterteilung: **23.06.1993**
(21) Anmeldenummer: 89116662.1
(22) Anmeldetag: 08.09.1989
(51) Int. Cl.: G01F 3/00, G01F 3/18, G01F 25/00

(54) **Einrichtung zur Korrektur von bauartbedingten Fehlern eines Flüssigkeitsmesswerkes mit beweglichen Trennwänden**
Apparatus for correcting errors due to the construction of a flow meter having movable partitions
Dispositif pour la correction d'erreurs dues à la construction d'un débitmètre à fluide à parois mobiles

(43) Veröffentlichungstag der Anmeldung: 13.03.1991
(73) Patentinhaber: SCHEIDT & BACHMANN GMBH, D-41238 Mönchengladbach (DE)
(72) Erfinder: Miller, Gert, Dipl.-Ing., D-4050 Mönchengladbach 1 (DE); Brandts, Klaus, Dipl.-Ing., D-4052 Korschenbroich 1 (DE)
(74) Vertreter: Stenger, Watzke & Ring Patentanwälte

(56) Entgegenhaltungen:
- WO-A-87/00267
- WO-A-88/08518
- DE-A- 3 010 263
- DE-B- 1 228 082
- GB-A- 2 053 485
- US-A- 4 489 615

## Beschreibung

Die Erfindung betrifft eine Einrichtung zur Korrektur von bauartbedingten Abweichungen der tatsächlich von einem Flüssigkeitsmeßwerk mit beweglichen Trennwänden, vorzugsweise einem Vierkolbenmesser zur Messung von Mineralölen, abgegebenen Menge von der durch einen Rechner ermittelten Anzeige mit einer auf der Welle des Meßwerks angeordneten Impulsscheibe mit äquidistanten Markierungen zur Erzeugung von durch einen Sensor aufgenommenen Quantisierungsimpulsen.

Bei der Verwendung von Flüssigkeitsmeßwerken mit beweglichen Trennwänden, insbesondere von Vierkolbenmessern zur kontinuierlichen Messung von Mineralölen, ergibt sich das Problem, daß bauartbedingte Abweichungen zwischen tatsächlich abgegebener Menge und der auf einer Anzeigevorrichtung angezeigten Menge auftreten, weil die Bewegung der die Menge fördernden Trennwände nicht linear proportional zu der Drehbewegung der Impulsscheibe ist. Mit der DE-AS 1 228 082 wurde zwar vorgeschlagen, die auf der Impulsscheibe angeordneten Markierungen entsprechend den Abweichungen von der Linearität anzuordnen, jedoch bedingt diese Korrektur eine exakte und dauerhafte physikalische Zuordnung der derart modifizierten Impulsscheibe zum Antrieb des Meßwerkes. Fehler in dieser Zuordnung können dazu führen, daß anstelle einer Fehlerkorrektur eine Vergrößerung der bauartbedingten Fehler auftritt.

Aus GB 2053485 ist ein Vierkolbenmesser zur Messung von Flüssigkeiten bekannt.
Die Zahl der ermittelten Impulse wird mit einem Korrigierungsfaktor multipliziert, der die bauartbedingten Abweichung berücksichtigt.

WO 88/08518 veröffentlicht ein Verfahren und eine Vorrichtung wobei jeder ermittelte Impuls mit einem eigenen Korrigierungsfaktor multipliziert wird. Jeder Korrigierunsfaktor wird auf der Basis der Summe der korrigierten Impulswerte mindestens eines vergangenen Meßintervals kalkuliert.

Der Erfindung liegt die Aufgabe zugrunde, eine Einrichtung der eingangs beschriebenen Art zu schaffen, die unter Einsatz des zur Ermittlung der jeweiligen Anzeigewerte vorhandenen Rechners eine Korrektur der bauartbedingten Abweichungen bewirkt, ohne daß eine aufwendige Justage der Impulsscheibe sowohl während der Montage als auch bei eventuellen Reparatur-und Wartungsarbeiten erforderlich ist.

Die Lösung dieser Aufgabenstellung durch die Erfindung ist dadurch gekennzeichnet, daß in einem Speicher des Rechners bei der Eichung des Meßwerkes ermittelte Korrekturwerte für die das tatsächliche zyklische Volumen berücksichtigenden Abweichungen zwischen der Drehbewegung der Impulsscheibe und der Bewegung der Trennwände des Meßwerks tabellarisch oder als mathematische Funktion abgespeichert sind und daß der ständig vom Rechner erfaßte periodisch schwankende Abstand zwischen den aufeinanderfolgenden Quantisierungsimpulsen zur phasenrichtigen Zuordnung der Tabellen- oder Funktionswerte zu den einzelnen Quantisierungsimpulsen verwendet wird.

Mit diesem Vorschlag der Erfindung wird eine Einrichtung geschaffen, die ohne zusätzliche Bauelemente und ohne Justieraufwand nicht nur die bauartbedingten Abweichungen korrigiert, sondern gleichzeitig die durch Fertigungstoleranzen unvermeidlichen Abweichungen zwischen dem theoretischen und dem tatsächlichen zyklischen Fördervolumen des Meßwerks berücksichtigt, die für jedes Meßwerk in einem Eichvorgang ermittelt werden müssen. Diese fertigungsbedingten Toleranzen werden bei den bauartbedingten Korrekturwerten berücksichtigt, die in der Art einer Tabelle oder Funktion in einem Speicher des Rechners abgelegt werden, so daß die erfindungsgemäße Korrektur über die eingangs beschriebene Korrektur der Markierungen auf der Impulsscheibe hinausgeht.

Anstelle einer bestimmten Zuordnung eines Anfangsimpulses auf der Impulsscheibe zu einer bestimmten Stellung der Antriebswelle des Meßwerkes erfolgt bei der erfindungsgemäßen Einrichtung die phasenrichtige Zuordnung der im Speicher des Rechners abgelegten Tabellen- oder Funktionswerte zu den einzelnen, von den Markierungen der Impulsscheibe erzeugten Quantisierungsimpulsen dadurch, daß der Rechner den periodisch schwankenden Abstand zwischen den aufeinanderfolgenden Impulsen erfaßt und durch Ermittlung der Wendepunkte der jeweiligen mathematischen Kurve, überwiegend einer Sinusfunktion, die notwendige Zuordnung herstellt.

Die erfindungsgemäße Ausbildung der Einrichtung zur Korrektur von bauartbedingten Fehlern ermöglicht auf einfache Weise auch die Korrektur von Fehlern, die durch unterschiedliche Betriebszustände, insbesondere unterschiedliche Durchflußgeschwindigkeiten entstehen. Gemäß einem weiteren Merkmal der Erfindung können in einer weiteren Tabelle im Rechner Korrektur- oder Funktionswerte für die Abweichungen der tatsächlichen Flüssigkeitsmenge von der theoretischen Flüssigkeitsmenge in Abhängigkeit von der Durchflußgeschwindigkeit abgespeichert werden. Diese Werte können entweder bezogen auf die jeweilige Bauart statistisch ermittelt oder aber individuell für das jeweilige Meßwerk bei der erforderlichen Eichung erfaßt werden.

Die Korrekturen zum Ausgleich des periodischen Fehlers und/oder der durchflußgeschwindigkeitsabhängigen Abweichung (Fehlerkurve des Meßwerkes) erfordert eine erhebliche Kapazitätsbelastung des Rechners. Eine entscheidende Auswirkung haben die Abweichungen aber nur bei kleinen Meßmengen (periodischer Fehler) bzw. bei geringen Durchflußgeschwindigkeiten. Ein weiteres Merkmal der Erfindung ist deshalb eine Steuerung der Korrektur des periodischen Fehlers nur bis zu einer festzulegenden Gesamtabgabemenge und die Steuerung zur Korrektur der Fehlerkurve nur während kleiner Durchflußgeschwindigkeiten.

Auf der Zeichnung ist ein Ausführungsbeispiel der erfindungsgemäßen Einrichtung dargestellt, und zwar zeigen:
- Fig. 1: einen Längsschnitt durch einen als Kolbenzähler ausgebildeten Volumenzähler mit der erfindungsgemäßen Korrektureinrichtung,
- Fig. 2: ein Diagramm, das das gemessene Volumen über dem Drehwinkel (periodischer Fehler) zeigt,
- Fig. 3: ein Diagramm, das den Meßfehler über der Durchflußleistung (Fehlerkurve) zeigt, und
- Fig. 4: ein Blockschaltbild der Korrektureinrichtung.

Der als Ausführungsbeispiel dargestellte Volumenzähler besitzt ein Gehäuse 1, in dem vier Kolben 2 jeweils in einer Zylinderbuchse 3 beweglich geführt sind. Die Kolben 2 sind jeweils paarweise durch eine Kreuzschleife 4 miteinander verbunden, wobei die Bewegungsrichtungen der beiden in einer gemeinsamen Ebene angeordneten Kolbenpaare rechtwinklig zueinander verlaufen.

Die beiden rechtwinklig zueinander verlaufenden Kreuzschleifen 4 der beiden Kolbenpaare besitzen jeweils ein Langloch, in welches eine Rolle 5 eingepaßt ist. Die beiden Rollen 5 sind drehbar auf dem Zapfen 6 einer Kurbelwelle 7 gelagert, deren Enden wiederum im Gehäuse 1 drehbar gelagert sind. Jeder durch die Zylinderbuchsen 3 gebildete Zylinder der vier Kolben 2 ist durch einen Zylinderdeckel 8 verschlossen. In jedem der Zylinderdeckel 8 mündet ein im Gehäuse 1 ausgebildeter Kanal 9.

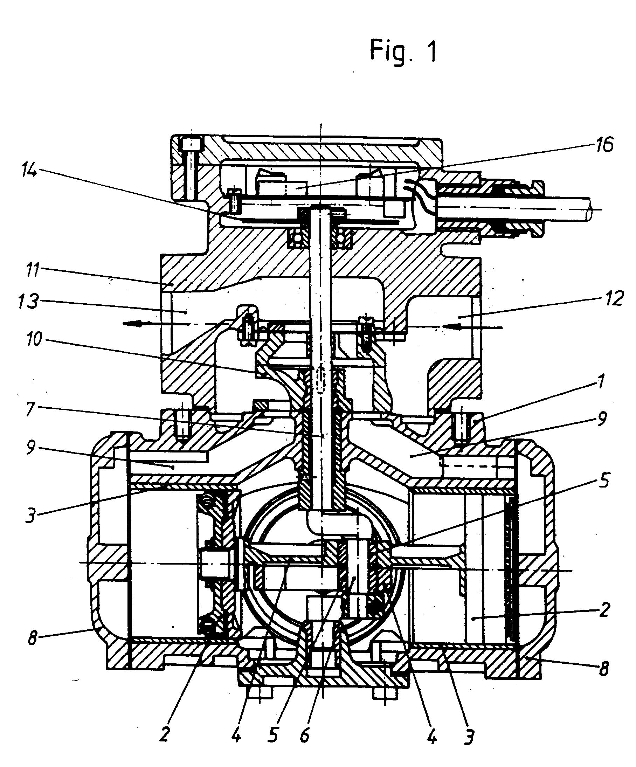

Mit diesen Kanälen 9 wirkt ein Drehschieber 10 zusammen, der auf der Kurbelwelle 7 befestigt und in einem Schiebergehäuse 11 angeordnet ist, das sich auf dem Gehäuse 1 befindet. Dieses Schiebergehäuse 11 besitzt einen Einlaßkanal 12 sowie einen Auslaßkanal 13 für die zu messende Flüssigkeit. Diese unter Druck stehende Flüssigkeit gelangt in Richtung des in Fig. 1 eingezeichneten Pfeiles in das Schiebergehäuse 11 und von hier über den Drehschieber 10 in einen der Kanäle 9. Aus diesem Kanal 9 strömt die Flüssigkeit durch den Zylinderdeckel 8 in die zugehörige Zylinderbuchse 3, in der sie den Kolben 2 in Richtung auf die Mitte des Gehäuses 1 verschiebt. Da dieser Kolben 2 über seine Kreuzschleife 4 mit dem gleichachsig angeordneten Kolben 2 fest verbunden ist, bewirkt die Verschiebung des einen Kolbens 2 mittels der Flüssigkeit ein Herausdrücken der in der Zylinderbuchse 3 des geschobenen Kolbens 2 befindlichen Flüssigkeit über den zugehörigen Zylinderdeckel 8 in den zugehörigen Kanal 9 und von hier durch den Drehschieber 10 in den Auslaßkanal 13. Dieser Vorgang wiederholt sich zyklisch in allen vier Zylinderbuchsen 3.

Die während des Arbeitszyklus stattfindende Verschiebung der Kolben 2 wird über die Kreuzschleifen 4 und Rollen 5 auf den Zapfen 6 der Kurbelwelle 7 übertragen, die sich dementsprechend bei einem Arbeitszyklus einmal um 360° dreht. Das während dieser 360°-Drehung durchgeflossene Flüssigkeitsvolumen (zyklisches Volumen) entspricht dem Meßraum des mit vier beweglichen Trennwänden ausgestatteten Volumenzählers.

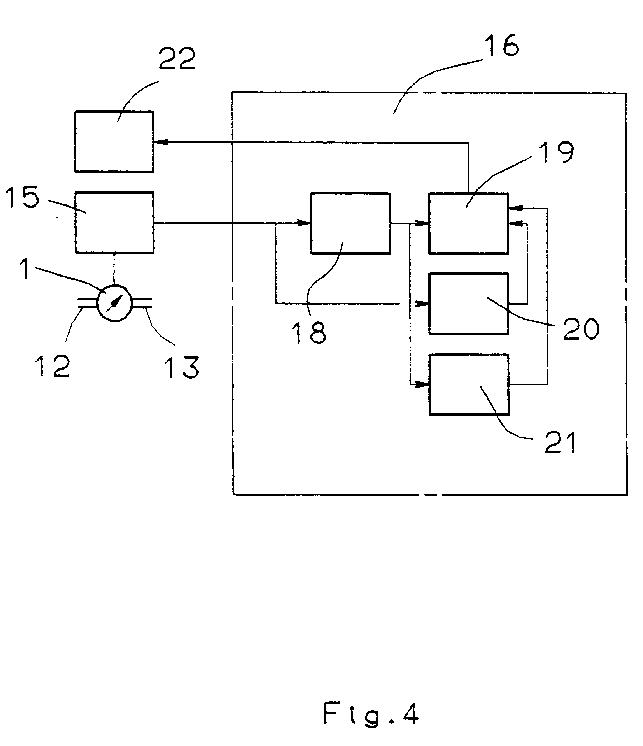

Die aus dem Gehäuse 1 nach oben in das Schiebergehäuse 11 hineinragende und den Drehschieber 10 tragende Kurbelwelle 7 ist über den Drehschieber 10 hinaus verlängert. Am Ende dieser Verlängerung trägt die Kurbelwelle 7 eine Impulsscheibe 14, die gemäß Fig. 1 in einer separaten Kammer des Schiebergehäuses 11 angeordnet ist. Diese Impulsscheibe 14 ist Bestandteil eines Impulsgebers 15, der im Blockschaltbild gemäß Fig. 4 zu erkennen ist. Diesem Impulsgeber 15 ist ein elektronischer Rechner 16 nachgeschaltet, dessen Komponenten wiederum der Fig. 4 entnommen werden können.

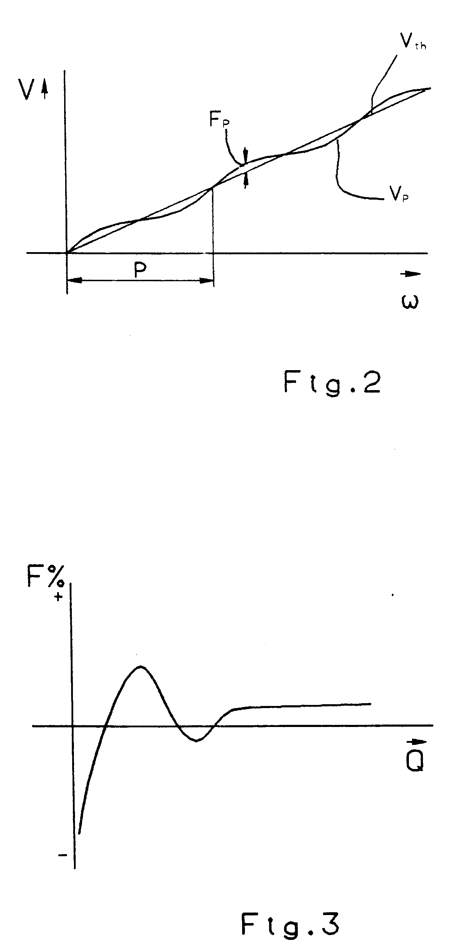

Die Fig. 2 zeigt in einem Diagramm das zunehmende Meßvolumen V in Abhängigkeit vom Drehwinkel ω der Kurbelwelle 7. Dabei ist die lineare Kurve Vₜₕ das theoretisch gemessene Volumen ohne Einfluß der nichtlinearen Kopplung der Kurbelwelle 7. Das tatsächlich gemessene Volumen Vₚ schwankt periodisch um den theoretischen Wert Vₜₕ, und zwar mit dem Wert des zu jeder Drehwinkelstellung zuzuordnenden periodischen Fehlers Fₚ. Die tatsächliche Periodenlänge P im Verhältnis zum Drehwinkel ω ergibt sich aus der Anzahl der während einer vollen Umdrehung der Kurbelwelle 7 wirksamen Meßkolbenhübe und ist im Falle des als Ausführungsbeispiel dargestellten Vierkolbenzählers eine Überlagerung mehrerer Kurven.

Die Fig. 3 zeigt ein Diagramm für einen typischen relativen Fehler F eines voranstehend beschriebenen Meßwerkes in Abhängigkeit von der Durchflußgeschwindigkeit Q. Hierbei sind überwiegend im Bereich kleiner Durchflußgeschwindigkeiten individuelle und bauarttypische Abweichungen (Fehler F) zwischen der tatsächlich durch das Meßwerk geflossenen Menge und der Drehzahl der Kurbelwelle des Meßwerkes festzustellen. Bei größeren Durchflußgeschwindigkeiten innerhalb der für das Meßwerk zulässigen Grenzen sind diese Fehlereinflüsse jedoch gering bzw. zu vernachlässigen.

Die Fig. 4 zeigt das Blockschaltbild der erfindungsgemäßen Korrektureinrichtung. Die vom Impulsgeber 15 erzeugten, drehwinkelproportionalen Impulse werden in den elektronischen Rechner 16 übernommen. Die Bewertung der jedem Impuls zuzuordnenden Teilmenge wird in einem Korrekturglied 18 für das zyklische Volumen auf den für das vorliegenden Meßwerk gültigen Wert gebracht. Anschließend werden diese Teilwerte in einem zweiten Korrekturglied 19 für den periodischen Fehler und den Durchflußfehler anhand von gespeicherten Tabellen oder durch Umrechnen über die mathematische Funktion auf die tatsächlichen Werte gebracht. Die Synchronisation der Korrekturen für den periodischen Fehler erfolgt durch Signale aus einem Wendepunktindikator 20.

Die tatsächliche Einflußnahme des Korrekturgliedes 19 zum Ausgleich des periodischen Fehlers bzw. der durchflußabhängigen Abweichung wird durch einen Durchflußindikator 21 gesteuert. Die Korrektur des periodischen Fehlers wird nur bis zu einer im Durchflußindikator 21 festzulegenden Gesamtmeßmenge je Einzelmeßvorgang und die Korrektur des durchflußabhängigen Fehlers nach Unterschreiten einer im Durchflußindikator 21 festzulegenden Durchflußgeschwindigkeit durchgeführt. Die korrigierten Werte werden auf einer Anzeige 22 dargestellt.

Mit der voranstehend beschriebenen Korrektureinrichtung werden somit ohne zusätzliche Bauelemente und ohne Justieraufwand nicht nur die bauartbedingten Abweichungen korrigiert, sondern gleichzeitig die durch Fertigungstoleranzen unvermeidlichen Abweichungen zwischen dem theoretischen und dem tatsächlichen zyklischen Fördervolumen des Meßwerks berücksichtigt. Die Korrekturwerte werden in der Art einer Tabelle oder als mathematische Funktion in einem Speicher des Rechners 16 abgelegt.

### Bezugszeichenliste

- 1: Gehäuse
- 2: Kolben
- 3: Zylinderbuchse
- 4: Kreuzschleife
- 5: Rolle
- 6: Zapfen
- 7: Kurbelwelle
- 8: Zylinderdeckel
- 9: Kanal
- 10: Drehschieber
- 11: Schiebergehäuse
- 12: Einlaßkanal
- 13: Auslaßkanal
- 14: Impulsscheibe
- 15: Impulsgeber
- 16: Rechner
- 18: Korrekturglied
- 19: Korrekturglied
- 20: Wendepunktindikator
- 21: Durchflußindikator
- 22: Anzeige
- F: Fehler
- Fₚ: periodischer Fehler
- P: Periodenlänge
- Q: Durchflußgeschwindigkeit
- V: Meßvolumen
- Vₜₕ: theoretisches Volumen
- Vₚ: tatsächliches Volumen
- ω: Drehwinkel

## Patentansprüche

1. Einrichtung zur Korrektur von bauartbedingten Abweichungen der tatsächlich von einem Flüssigkeitsmeßwerk mit beweglichen Trennwänden, vorzugsweise einem Vierkolbenmesser zur Messung von Mineralölen, abgegebenen Menge von der durch einen Rechner (16) ermittelten Anzeige mit einer auf der Welle (7) des Meßwerks angeordneten Impulsscheibe (14) mit äquidistanten Markierungen zur Erzeugung von durch einen Sensor aufgenommenen Quantisierungsimpulsen,
**dadurch gekennzeichnet,**
daß in einem Speicher des Rechners (16) bei der Eichung des Meßwerks ermittelte Korrekturwerte für die das tatsächliche zyklische Volumen berücksichtigenden Abweichungen zwischen der Drehbewegung der Impulsscheibe (14) und der Bewegung der Trennwände des Meßwerks tabellarisch oder als mathematische Funktion abgespeichert sind und daß der ständig vom Rechner (16) erfaßte periodisch schwankende Abstand zwischen den aufeinanderfolgenden Quantisierungsimpulsen zur phasenrichtigen Zuordnung der Tabellen- oder Funktionswerte zu den einzelnen Quantisierungsimpulsen verwendet wird.

2. Einrichtung nach Anspruch 1, dadurch gekennzeichnet, daß in einer weiteren Tabelle im Rechner (16) Korrektur- oder Funktionswerte für die Abweichungen der tatsächlichen Flüssigkeitsmenge (Vₚ) von der theoretischen Flüssigkeitsmenge (Vₜₕ) in Abhängigkeit von der Durchflußgeschwindigkeit (Q) abgespeichert sind.

3. Einrichtung nach Anspruch 1, dadurch gekennzeichnet, daß die Berücksichtigung der abgelegten Korrektur- oder Funktionswerte für den periodischen Fehler (Fₚ) nur bis zu einer einstellbar vorgegebenen Gesamtabgabemenge erfolgt.

4. Einrichtung nach Anspruch 2, dadurch gekennzeichnet, daß die Berücksichtigung der tabellarisch abgelegten Korrektur-oder Funktionswerte für die von der Durchflußgeschwindigkeit (Q) abhängigen Korrekturwerte nur bis zu einer vorgegebenen Durchflußgeschwindigkeit erfolgt.

## Claims

1. Device for the correction of type-dependent deviations of the quantity which is actually emitted by a fluid measuring mechanism having moving separating walls, preferably a four-piston meter for measuring mineral oils, from the indication determined by a computer (16), having a pulse disc (14) which is arranged on the shaft (7) of the measurement mechanism and has equidistant markings for producing quantisation pulses which are recorded by a sensor, characterised in that correction values, which are determined during the calibration of the measurement mechanism, for the deviations, which take into account the actual cyclic volume, between the rotational movement of the pulse disc (14) and the movement of the separating walls of the measurement mechanism are stored in tabular form or as a mathematical function in a memory of the computer (16), and in that the periodically fluctuating separation, which is detected continuously by the computer (16), between the successive quantisation pulses is used to allocate the tabular or function values to the individual quantisation pulses in the correct phase.

2. Device according to Claim 1, characterised in that correction or function values for the deviations of the actual fluid quantity (Vₚ) from the theoretical fluid quantity (Vₜₕ) are stored in a further table in the computer (16), as a function of the flow rate (Q).

3. Device according to Claim 1, characterised in that the stored correction or function values for the periodic error (Fₚ) are taken into account only up to a total output quantity which can be predetermined in an adjustable manner.

4. Device according to Claim 2, characterised in that the correction or function values which are stored in tabular form for the correction values which depend on the flow rate (Q) are taken into account only up to a predetermined flow rate.

## Revendications

1. Dispositif de correction d'écarts, dus à la conception, entre la quantité effectivement délivrée par un débitmètre à parois mobiles, de préférence par un instrument à quatre pistons pour la mesure d'huiles minérales, et l'indication fournie par un ordinateur (16), comprenant un disque à impulsions (14) qui est monté sur l'axe (7) du débitmètre et qui comporte des repères équidistants pour générer des impulsions de quantification enregistrées par un capteur, caractérisé en ce que, dans une mémoire de l'ordinateur (16), sont stockées, sous forme de tables ou de fonctions mathématiques, des valeurs de correction qui sont enregistrées lors de l'étalonnage du débitmètre et qui correspondent aux écarts qui tiennent compte du volume cyclique effectif et qui existent entre le mouvement de rotation du disque à impulsions (14) et le déplacement des parois du débitmètre, et en ce que l'écart variable périodiquement, qui est enregistré en permanence par l'ordinateur (16) et qui existe entre les impulsions de quantification successives, est utilisé pour affecter, en respectant les phases, les valeurs des tables ou des fonctions aux différentes impulsions de quantification.

2. Dispositif selon la revendication 1, caractérisé en ce que, dans une autre table de l'ordinateur (16), sont stockées des valeurs de correction ou de fonction correspondant aux écarts entre la quantité de fluide effective (Vₚ) et la quantité de fluide théorique (Vₜₕ) en fonction de la vitesse de passage (Q).

3. Dispositif selon la revendication 1, caractérisé en ce que les valeurs stockées de correction ou de fonctions pour l'erreur périodique (Fₚ) ne sont prises en compte que jusqu'à un débit total prédéfini et réglable.

4. Dispositif selon la revendication 2, caractérisé en ce que les valeurs de correction ou de fonctions stockées sous forme de tables et correspondant aux valeurs de correction qui sont fonction de la vitesse de passage (Q) ne sont prises en compte que jusqu'à une vitesse de passage prédéfinie.
